# EUROPEAN PATENT APPLICATION

(11) **EP 4 310 932 A1**
(43) Date of publication of application: **24.01.2024**
(21) Application number: 23186548.6
(22) Date of filing: 19.07.2023
(51) Int. Cl.: H01M 4/04, H01M 10/04, H01M 10/44

(54) **PRESSING APPARATUS FOR BATTERY CELL**

(30) Priority: 20.07.2022 KR 20220089469
(71) Applicant: SK On Co., Ltd., Seoul 03161 (KR)
(72) Inventor: KIM, Hyung Joon, 34124 Daejeon (KR); CHO, Youn Soo, 34124 Daejeon (KR)
(74) Representative: Stolmár & Partner Patentanwälte PartG mbB

(57) **Abstract**

The pressing apparatus for a battery cell includes a frame, a plurality of plates movably installed in the frame in a first direction and arranged to face each other in the first direction to form accommodating space, a lead contact member including a charge-discharge plate electrically connected to an electrode lead of a battery cell for at least one of charging and discharging of the battery cell accommodated in the accommodating space, and a moving unit connected to the lead contact member so that the lead contact member is movable in the first direction is provided. The moving unit may move between a first position in which the lead contact member is disposed inside the plurality of plates in the first direction and a second position in which the lead contact member is disposed outside the plurality of plates in the first direction.

## Description

### BACKGROUND

### 1. FIELD

The present disclosure relates to a pressing apparatus for a battery cell, and more particularly, to a pressing apparatus for a battery cell, capable of performing charging and discharging by pressing a plurality of battery cells to activate the battery cells.

### 2. DESCRIPTION OF RELATED ART

In general, secondary batteries, unlike primary batteries, may be charged and discharged, and thus, may be applied to various fields, such as digital cameras, mobile phones, laptop computers, hybrid vehicles, and electric vehicles.

Among these secondary batteries, research into lithium secondary batteries having high energy density and discharge voltage has been actively conducted. Recently, lithium secondary batteries have been manufactured as pouch-type or prismatic or cylindrical can-type battery cells. A plurality of battery cells are electrically connected to be used.

In the pouch-type battery cell according to the related art, an electrode assembly is accommodated inside a pouch. An electrode lead is connected to the electrode assembly.

Pouch-type secondary batteries are manufactured through a process of assembling battery cells and activating the batteries. In the battery activation operation, battery cells are loaded into a device for charging and discharging the battery cells, and charging and discharging are performed under conditions necessary for activation. As such, the process of performing a small amount of charging and discharging using the charging and discharging device to activate a battery is referred to as a formation process.

During the formation process of the secondary battery, by pressing the secondary battery cell with a pressing plate, an increase in thickness of the battery cell may be suppressed during charging and discharging and an increase in thickness of the battery cell due to gas generation may be suppressed.

A pressing apparatus for a battery cell may include a plurality of pressing plates installed to simultaneously perform charging and discharging processes on a plurality of battery cells. The pressing plate includes a charge-discharge plate for charging and discharging the battery cell, and the charge-discharge plate is disposed to have a constantly protruding structure so as to be connected to an electrode lead of the battery cell.

Meanwhile, in the process of pressing a plurality of battery cells, the number of battery cells actually inserted into the charging and discharging device may be less than the number of pressing plates provided in the charging and discharging device, or a battery cell inserted between the pressing plates of the charging and discharging device may need to be removed due to defects in the battery cell. That is, an empty space in which no battery cells exist may be formed between the pressing plates.

As such, when battery cells are not located between the pressing plates, the charging and discharging process should be performed by additionally inserting a dummy cell into the empty space, and thus, a process of additionally inserting the dummy cell is required. If the dummy cell is not inserted, the charge-discharge plates of adjacent pressing plates may contact and press each other, resulting in damage to the charge-discharge plates or deformation of the pressing plates.

### SUMMARY

The present disclosure may be implemented in some embodiments to provide a pressing apparatus for a battery cell, capable of preventing breakage of a charge-discharge plate.

The present disclosure may be implemented in some embodiments to provide a pressing apparatus for a battery cell, capable of preventing deformation of a plate.

The present disclosure may be implemented in some embodiments to provide a pressing apparatus for a battery cell, capable of improving an operation speed by omitting a process of additionally inserting a dummy cell.

In some embodiments of the present disclosure, a pressing apparatus for a battery cell includes: a frame; a plurality of plates movably installed in the frame in a first direction and arranged to face each other in the first direction to form accommodating space; a lead contact member including a charge-discharge plate electrically connected to an electrode lead of a battery cell for at least one of charging and discharging of the battery cell accommodated in the accommodating space; and a moving unit connected to the lead contact member so that the lead contact member is movable in the first direction. The moving unit may move between a first position in which the lead contact member is disposed inside the plurality of plates in the first direction and a second position in which the lead contact member is disposed outside the plurality of plates in the first direction.

Each of the plurality of plates may include a plate body in contact with a cell body of the battery cell and an installation member located outside the plate body in a second direction, which is a length direction of the plurality of plates, and on which the moving unit is disposed, and a thickness of the installation member in the first direction may be less than a thickness of the plate body in the first direction.

The moving unit may be disposed on both sides of the installation member in the first direction.

A thickness of the lead contact member in the first direction may be less than or equal to half of a difference between the thickness of the plate body and the thickness of the installation member in the first direction.

The installation member may be disposed on each of both ends of the plurality of plates in the second direction.

The lead contact member may be disposed to be connected to the moving unit to face both sides of the installation member in the first direction.

The charge-discharge plate may be disposed to be connected to the moving unit to face both sides of the installation member in the first direction.

The lead contact member may include a support member supporting the other side of the electrode lead when the charge-discharge plate contacts one side of the electrode lead, the charge-discharge plate may be connected to the moving unit to face one of both sides of the installation member in the first direction, and the support member may be connected to the moving unit to face the other side.

The moving unit may include a compression unit capable of compressing in the first direction, and the lead contact member may be disposed in the first position as the compression unit is compressed.

A maximum thickness of the compression unit in the first direction may be half or more of a thickness of a cell body of the battery cell.

The compression unit may include an air chamber configured to be expanded upon receiving air from the outside or to be compressed by discharging air to the outside.

The pressing apparatus may further include: a pressing member connected to the frame and pressing the plurality of plates in the first direction.

The pressing apparatus may further include: a pressure sensor connected to the frame and configured to directly or indirectly measure pressure applied to the battery cell.

### BRIEF DESCRIPTION OF DRAWINGS

Certain aspects, features, and advantages of the present disclosure are illustrated by the following detailed description with reference to the accompanying drawings.
FIG. 1 is a plan view schematically illustrating a pressing apparatus for a battery cell according to an embodiment of the present disclosure.
FIG. 2 is a perspective view illustrating an example of a pouch-type battery cell including an electrode assembly, a sealing portion, and an electrode lead.
FIGS. 3 to 5 are plan views illustrating various examples of a pressing apparatus for a battery cell according to an embodiment of the present disclosure.
FIGS. 6 and 7 are front views illustrating a charge-discharge plate and a moving unit according to an embodiment of the present disclosure.
FIG. 8 is a plan view illustrating a state in which some battery cells are separated from a pressing apparatus for a battery cell.

### DETAILED DESCRIPTION

Features of the present disclosure disclosed in this patent document are described by example embodiments with reference to the accompanying drawings.

Prior to the description of the present disclosure, terms and words used in the present specification and claims to be described below should not be construed as limited to ordinary or dictionary terms, and should be construed in accordance with the technical idea of the present disclosure based on the principle that the inventors may properly define their own disclosed technologies in terms of terms in order to best explain the present disclosure. Therefore, the embodiments described in the present specification and the configurations illustrated in the drawings are merely the most preferred embodiments of the present disclosure and are not intended to represent all of the technical ideas of the present disclosure, and thus should be understood that various equivalents and modifications may be substituted at the time of the present application.

Hereinafter, preferred embodiments of the present disclosure will be described in detail with reference to the accompanying drawings. In this case, in the drawings, the same components are denoted by the same reference symbols as possible. Further, the detailed description of well-known functions and constructions which may obscure the gist of the present disclosure will be omitted. For the same reason, some of the elements in the accompanying drawings are exaggerated, omitted, or schematically illustrated, and the size of each element does not entirely reflect the actual size.

The present disclosure may be implemented in some embodiments to provide a pressing apparatus for a battery cell for activating a secondary battery. Hereinafter, the pressing apparatus according to the present disclosure will be described in detail with reference to the drawings.

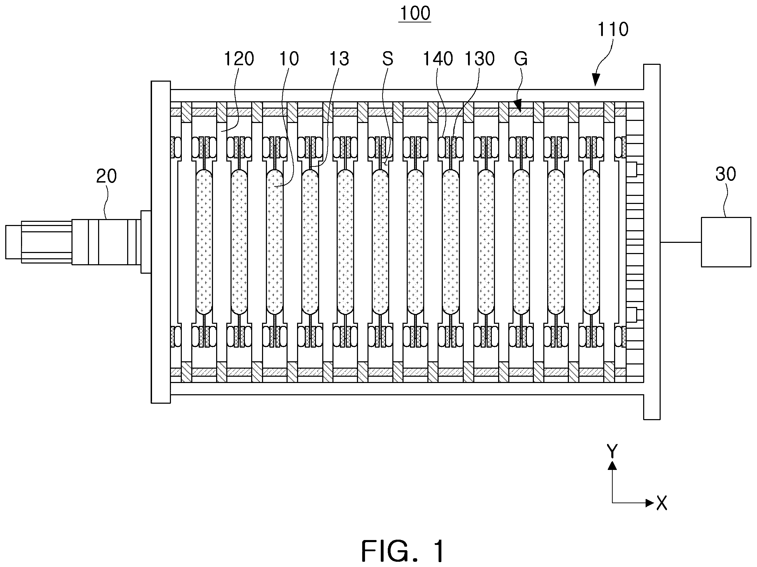

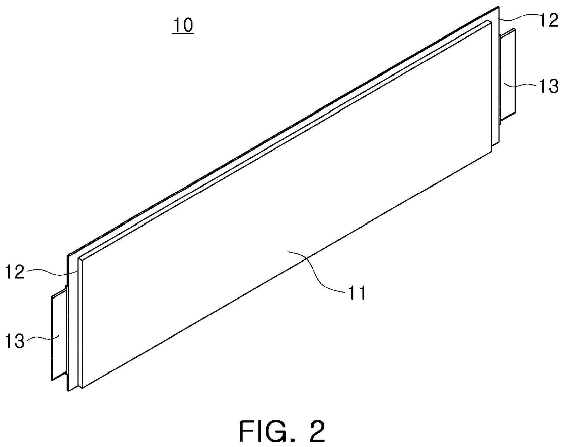

First, a pressing apparatus for a battery cell and a battery cell will be described with reference to FIGS. 1 and 2.

FIG. 1 is a plan view schematically illustrating a pressing apparatus 100 for a battery cell according to an embodiment of the present disclosure. Referring to FIG. 1, the pressing apparatus 100 for a battery cell according to an embodiment of the present disclosure may include a frame 110, a plurality of plates 120, a lead contact member 130, and a moving unit 140.

The frame 110 is disposed outside the plate 120 to protect the plate 120, the lead contact member 130, and the moving unit 140 from an external environment. The frame 110 may include a guide member G supporting the plate 120 and guiding movement of the plate 120.

The guide member G may be connected to each plate 120. The guide member G may move the plate 120 in a first direction (an X-direction), and may include a shaft.

The plates 120 may be arranged in the first direction (the X-direction) along the guide member G. The plates 120 may be arranged to be spaced apart from each other in a facing manner, and may move in the first direction (the X-direction) along the guide member G. In an embodiment, the plates 120 may be pressed in the first direction (the X-direction) by the pressing apparatus to be described below. Accommodating spaces S respectively accommodating the battery cells 10 may be formed between the plates 120.

The plate 120 may be formed of a metal material, and materials having high mechanical strength, such as reinforced plastic and reinforced ceramic, may also be used. However, the material of the plate 120 is not limited to the aforementioned material as long as it may have rigidity capable of supporting a state in which the battery cell 10 is pressed.

The battery cell 10 may be configured as a secondary battery. As an example, the battery cell 10 may be formed of a lithium secondary battery, but is not limited thereto. For example, the battery cell 10 may be configured as various types of secondary batteries, such as a nickel-cadmium battery, a nickel-metal hydride battery, and a nickel-hydrogen battery. In addition, the battery cell 10 may be formed of a pouch-type secondary battery. However, the use of a prismatic secondary battery as the battery cell 10 is not excluded. Hereinafter, for convenience of description, a pouch-type secondary battery will be described as an example.

Referring to FIG. 2, the battery cell 10 may include a cell body 11, a sealing portion 12 and an electrode lead 13.

The cell body 11 provides an internal space in which the electrode assembly and the electrolyte are accommodated. The electrode assembly includes a plurality of electrode plates and electrode tabs and is accommodated in a pouch. The electrode plate includes a positive plate and a negative plate. The electrode assembly may have a form in which a positive electrode plate and a negative electrode plate are stacked with a separator interposed therebetween in a state in which large surfaces of the positive electrode plate and the negative electrode plate face each other. The plurality of positive electrode plates and the plurality of negative electrode plates may be provided with electrode tabs, respectively. The electrode tabs may contact each other with the same polarities and be connected to the electrode lead 13 of the same polarity.

At least a portion of the circumference of the cell body 11 may join the sealing portion 12 to form a sealed space inside the pouch. The sealing portion 12 is formed in the form of a flange extending from the cell body 11 to the outside and is disposed along an outer portion of the cell body 11. A thermal fusion method may be used to join the pouch to form the sealing portion 12, but is not limited thereto.

The electrode lead 13 is connected to the electrode assembly to supply electricity to the outside or receive electricity. Electrode tabs contacting each other with the same polarities may be connected to the electrode lead 13. The electrode leads 13 may be disposed on both sides of the cell body 11 to face in opposite directions. However, the electrode leads 13 may also be arranged to face each other in the same direction on one side of the cell body 11.

The lead contact member 130 is configured to be electrically connectable to the electrode lead 13 of the battery cell 10 for at least one of charging and discharging of the battery cell 10. On both sides of the plate 120 in the first direction (the X-direction), the moving unit 140 connected to the lead contact member 130 and allowing the lead contact member 130 to move in the first direction (the X-direction) may be provided. Specifically, the lead contact member 130 may be connected to the moving unit 140 and may move independently of the plate 120. The moving unit 140 may be disposed on both sides of the plate 120 in the first direction (the X-direction). The lead contact member 130 and the moving unit 140 will be described below.

A pressing member 20 for pressing the plate 120 or a pressure sensor 30 for measuring pressure applied to the battery cell 10 may be connected to the frame 110.

The pressing member 20 may be installed in the frame 110 to move the plate 120. The pressing member 20 may move the plate 120 in the first direction (the X-direction) in which the plurality of plates 120 are arranged. The pressing member 20 may move the plate 120 in a direction in which the plate 120 is pressed or may move in a direction opposite to the pressing direction to release the pressing. The pressing member 20 may be a servo motor used for precise control, but is not limited thereto.

The pressure sensor 30 may be installed in the frame 110 to measure pressure applied to the battery cell 10. The pressure sensor 30 may measure pressure applied to the battery cell 10 in the first direction (the X-direction). Accordingly, a pressing state of the battery cell 10 may be identified through the pressure sensor 30. The pressure sensor 30 may be a load cell measuring pressure by converting deformation, but is not limited thereto.

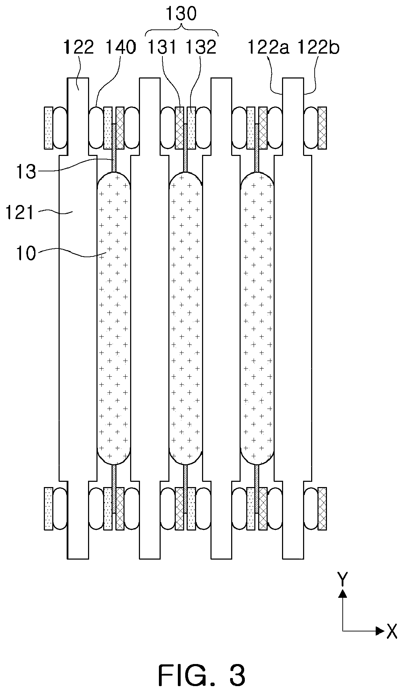

Next, the plate 120, the lead contact member 130, and the moving unit 140 will be described in detail referring to FIGS. 3 to 5.

FIGS. 3 to 5 are plan views of a pressing apparatus for a battery cell according to an embodiment, illustrating some configurations of some embodiments of the present disclosure.

The plate 120 may include a plate body 121 in contact with the cell body 11 of the battery cell 10 accommodated between the plates 120 and an installation member 122 located outside the plate body 121 in the second direction (a Y direction) and allowing the moving unit 140 to be installed thereon.

The installation member 122 may be disposed on both ends of the plate or disposed only on one end of both ends in the second direction (the Y-direction).

For example, as shown in FIGS. 3 to 5, the installation members 122 may be disposed at both ends of the plate in the second direction (the Y-direction). The electrode leads 13 may be disposed at both ends of the cell body 11 in the second direction (the Y-direction). Therefore, the installation members 122 are disposed at both ends of the plate in the second direction (the Y-direction), and the moving unit 140 and the lead contact member 130 may be disposed to face the installation member 122, so that the electrode lead 13 and the lead contact member 130 may be in contact with each other. Meanwhile, a plurality of electrode leads 13 may be formed in only one direction of the second direction (the Y-direction) in the cell body 11, and in this case, the installation member 122 may be disposed only at one end of the plate in the second direction (the Y-direction). That is, the installation member 122 does not have to be disposed at both ends of the plate 120 in the second direction (the Y-direction). However, in this specification, for convenience of description, the plate 120 in which the installation member 122 is disposed at both ends in the second direction (the Y-direction) is described as an example.

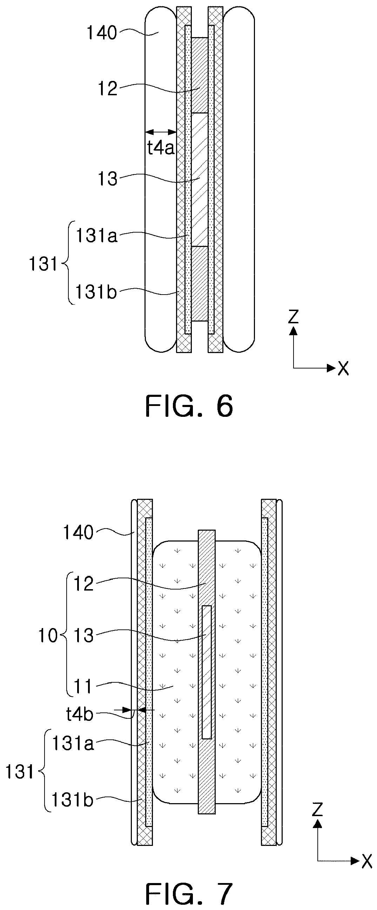

The moving unit 140 may move the lead contact member 130 in the first direction (the X-direction). The moving unit 140 may be formed on both sides of the installation member 122 in the first direction (the X-direction). For example, a thickness of the moving unit 140 in the first direction may change, and accordingly, the lead contact member 130 may move in the first direction (the X-direction). However, the configuration in which the moving unit 140 moves the lead contact member 130 is not limited to the configuration in which the thickness of the moving unit 140 changes. A specific movement method through the moving unit 140 will be described below with reference to FIGS. 6 and 7.

Referring to FIG. 3, the lead contact member 130 may contact the electrode lead 13 of the battery cell 10. The lead contact member 130 may include a charge-discharge plate 131 electrically connected to the electrode lead 13 to charge the battery cell 10 and a support member 132 supporting the other side of the electrode lead 13 when the charge-discharge plate 131 contacts one side of the electrode lead 13.

When the charge-discharge plate 131 contacts one side of the electrode lead 13, the support member 132 may contact the other side of the electrode lead 13 to support the electrode lead 13. The support member 132 may be disposed to face the charge-discharge plate 131 with the electrode lead 13 interposed therebetween. The support member 132 may be formed of an epoxy material, but may be formed any material capable of supporting the electrode lead 13, and is not limited thereto.

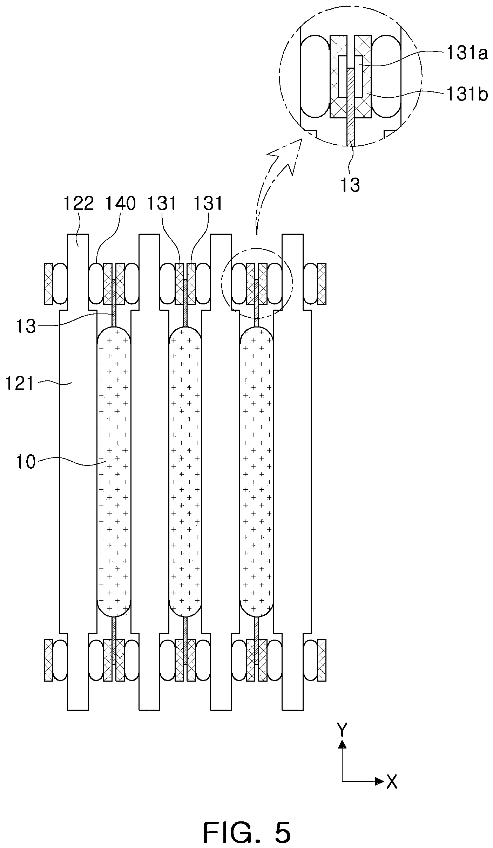

The charge-discharge plate 131 may contact the electrode lead to charge or discharge the battery cell 10, which will be described below with reference to FIG. 5.

The lead contact member 130 may be disposed to be connected to the moving unit 140 to contact the electrode lead 13. For example, the moving unit 140 is disposed on the installation member 122, and the lead contact member 130 is disposed to be connected to the moving unit 140 to face both sides of the installation member 122 in the first direction (the X-direction).

Since the moving unit 140 may be provided on both sides of the installation member 122 in the first direction (the X-direction), the lead contact member 130 may also be provided to face both sides of the installation member 122 in the first direction (the X-direction). When the lead contact member 130 is provided only on one side of the installation member 122, it may be difficult for the lead contact member 130 to accurately contact the electrode lead 13. In the process of pressing the plate 120, the lead contact member 130 may not properly contact the electrode lead 13 so current may not be applied to the electrode lead 13 or the electrode lead 13 may be bent.

In an embodiment of the present disclosure, the lead contact member 130 and the moving unit 140 are provided on both sides of the installation member 122 so that the lead contact member 130 and the electrode lead 13 may accurately contact each other and charging and discharging may be stably performed.

Referring to FIG. 3, the charge-discharge plate 131 and the support member 132 may be disposed as the lead contact member 130. Hereinafter, for convenience of description, plates adjacent to each other with one battery cell interposed therebetween, among the arranged plates 120, will be referred to as a first plate and a second plate, respectively.

The charge-discharge plate 131 may be disposed to face one side 122a of the installation member of the first plate and the other side 122b of the installation member, and the support member 132 may be disposed to face one side 122a of the installation member 122 of the second plate and the other side 122b of the installation member 122 of the second plate. In addition, the plate 120 on which the charge-discharge plate 131 is disposed and the plate 120 on which the support member 132 is disposed may be alternately arranged. Thus, the electrode lead 13 of the battery cell 10 accommodated between the first plate and the second plate may contact the charge-discharge plate 131 and the support member 132. The battery cell 10 may be charged through the charge-discharge plate 131 connected to the electrode lead 13.

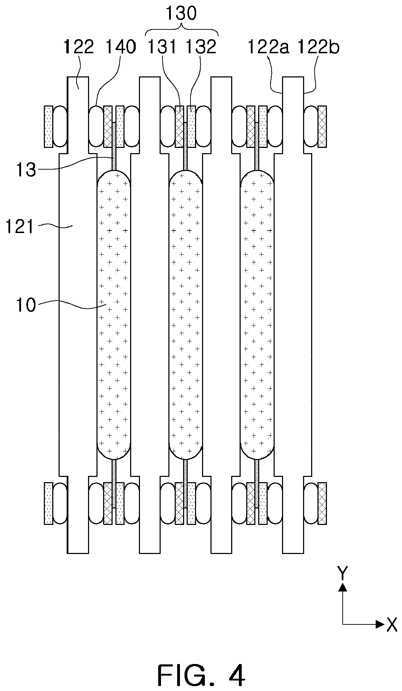

Referring to FIG. 4, unlike the embodiment of FIG. 3, the charge-discharge plate 131 may be disposed to face the other side 122b of the installation member, and the support member 132 may be disposed to face one side 122a of the installation member. However, in order to charge the battery cell 10 between the first plate and the second plate, the charge-discharge plate 131 may be arranged to contact the electrode lead 13.

FIG. 5 shows an embodiment in which the charge-discharge plate 131 is disposed as the lead contact member 130. The charge-discharge plate 131 may be connected to both the moving units 140 of the first plate and the second plate. Therefore, current may flow through the electrode lead 13 and the charge-discharge plate 131, and thus, the battery cell 10 provided between the first plate and the second plate may be charged.

Referring to FIG. 5, the charge-discharge plate 131 may include a conductive plate 131a and an insulating plate 131b. The conductive plate 131a may contact the electrode lead 13 in order to charge or discharge the battery cell 10 and apply current to the electrode lead 13 or receive current from the electrode lead 13 in the process of charging or discharging the battery cell 10. To this end, the conductive plate 131a may include an electrically conductive material. For example, the conductive plate 131a may be formed of a copper plate, but is not limited thereto. The insulating plate 131b may be formed in a plate shape having a surface larger than that of the conductive plate 131a. For example, the insulating plate 131b may be a printed circuit board, but the material is not limited thereto as long as it supports the conductive plate and has insulating properties.

Next, the moving unit 140 and a movement method of the moving unit 140 will be described in more detail with reference to FIGS. 6 and 7.

FIGS. 6 and 7 are front views illustrating the moving unit 140, the charge-discharge plate 131, and the battery cell 10. Although the charge-discharge plate 131 is shown in FIGS. 6 and 7, a case in which the lead contact member 130 contacts the moving unit 140 may also correspond thereto.

The moving unit 140 may move the lead contact member 130 in the first direction (the X-direction). For example, the moving unit 140 may include an air chamber, a thin cylinder, an electromagnet, etc., but is not limited thereto.

The moving unit 140 may include a compression unit that may be compressed in the first direction (the X-direction). The compression unit may have a structure in which a thickness thereof in the first direction changes. For example, the compression unit may vary in thickness between a maximum thickness t4a and a minimum thickness t4b. When the compression unit is maintained in an uncompressed state, the compression unit may have the maximum thickness t4a, and when the compression unit is maintained in a maximum compressed state, the compression unit may have the minimum thickness t4b. The compression unit may be the air chamber, air bag, etc., described above but is not limited thereto, and any unit that can be compressed and expanded in thickness may be used as the compression unit.

In an embodiment, when the moving unit 140 includes an air chamber, air may be injected into the air chamber from an air supply unit (not shown), and the air chamber may expand in thickness in the first direction upon receiving air. Accordingly, as the air chamber expands, the lead contact member 130 connected to the air chamber may move in the first direction (the X-direction).

In addition, the air chamber may discharge air, and accordingly, the thickness of the air chamber in the first direction may decrease. Accordingly, the lead contact member 130 may move in the first direction (the X-direction) due to the change in thickness of the air chamber in the first direction.

In an embodiment, the moving unit 140 may include a thin cylinder, and an air cylinder, among the thin cylinders, may be used. As compressed air is introduced into and discharged from the air cylinder, a piston of the air cylinder may move in the first direction (the X-direction).

In another embodiment, the moving unit 140 may include an electromagnet, and current may be applied to the electromagnet so that the electromagnet assumes magnetism. Accordingly, a magnetic material may be provided in the installation member 122 to allow force to act with the electromagnet and may move the lead contact member 130 in the first direction (the X-direction).

Hereinafter, in this specification, for convenience of description, the moving unit 140 is described based on a compressible air chamber, but without being limited thereto, any unit may be used as the moving unit 140 as long as it can move the lead contact member 130 in the first direction (X-axis direction).

FIG. 6 is a front view of the pressing apparatus for a battery cell in a state in which the lead contact member 130 has moved in the direction of the electrode lead 13. In an embodiment, when the moving unit 140 includes a compression unit, this may correspond to a case in which the compression unit is not compressed. At this time, a thickness t4a of the compression unit in the first direction may be maximized, and the charge-discharge plate 131 may move in the first direction (the X-direction) to contact the electrode lead 13.

FIG. 7 is a front view of the pressing apparatus for a battery cell in a state in which the lead contact member 130 has moved in the direction of the moving unit 140. In an embodiment, when the moving unit 140 includes a compression unit, this may correspond to a case in which the compression unit is compressed to the maximum. At this time, the thickness t4 of the compression unit in the first direction may be minimized.

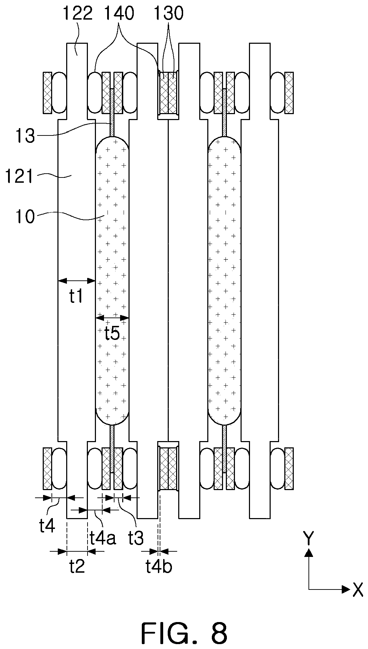

Next, the arrangement of the pressing apparatus for a battery cell will be described by comparing thicknesses of components in an embodiment with reference to FIG. 8.

FIG. 8 is a plan view of a pressing apparatus for a battery cell in which the moving unit 140 includes a compression unit and the thickness t4 of the compression unit in the first direction is variable.

In the related art charge-discharge pressing apparatus, the charge-discharge plate protrudes from the plate in the first direction (the X-direction) and is fixed to contact the electrode lead. For example, a fixing member may be formed of an epoxy material. Accordingly, the charge-discharge plate 131 is fixed by the plate 120 and the fixing member, and cannot be moved in the first direction (the X-direction). Therefore, since the charge-discharge plate is fixed in a protruding state, there is a problem in that the charge-discharge plate may be damaged and the plate 120 is deformed when the plate is pressed without a battery cell.

However, according to an embodiment of the present disclosure, the moving unit 140 may move between a first position at which the lead contact member 130 is disposed inside the plate in the first direction (the X-direction) and a second position at which the lead contact member 130 is disposed outside the plate in the first direction (the X-direction). Specifically, the moving unit 140 and the lead contact member 130 may be installed on the installation member 122 and may be located inside relative to the thickness of the plate body 121. Therefore, when the plate 120 is pressed in the first direction (the X-direction) without the battery cell 10, the lead contact member 130 may move to the inside of the plate body 121, even without a dummy cell, and thus, the lead contact member 130 may not be damaged.

Referring to FIG. 8, first, referring to the thickness of the plate 120, the thickness t2 of the installation member in the first direction may be less than the thickness t1 of the plate body in the first direction. A compression unit may be disposed on the installation member 122, and the lead contact member 130 may be connected to the compression unit. Therefore, when the lead contact member 130 and the compression unit are disposed on both sides of the installation member 122, the sum of the thicknesses of the installation member 122, the lead contact member 130, and the compression unit in the first direction may be (t2+2*t4+2*t3). Since the thickness t4 of the compression unit in the first direction may change, and accordingly, the lead contact member 130 disposed to face the installation member 122 may move in the first direction (the X-direction), each of which will be described.

When the compression unit is compressed to the maximum, the thickness t4 of the compression unit in the first direction may be minimized (t4b). Referring to FIG. 8, the minimum thickness t4b of the compression unit in the first direction may be less than the thickness t3 of the lead contact member in the first direction. Therefore, when the compression unit is compressed to the maximum, the sum of the thicknesses of the installation member 122, the lead contact member 130, and the compression unit in the first direction may be similar to or greater than (t2+2*t3).

Since the lead contact member 130 may be disposed inside relative to the thickness of the plate body 121 in the first direction, when the compression unit is compressed to the maximum, the sum of the thicknesses of the installation member 122, the lead contact member 130, and the compression unit in the first direction may be less than or equal to the thickness t1 of the plate body in the first direction. Therefore, since (t2+2*t3) may be less than or equal to tl, the thickness t3 of the lead contact member in the first direction may be less than or equal to half of a difference between the thickness t1 of the plate body and the thickness t2 of the installation member in the first direction. Accordingly, even if the battery cell 10 is not accommodated between the plates 120 and is pressed in the first direction (the X-direction), the lead contact member 130 may be disposed inside the plate in the first direction in the first position and may not be damaged.

When the compression unit is not compressed, the thickness t4 of the compression unit in the first direction may be maximized. When the compression unit is not compressed, the sum of the thicknesses of the installation member 122, the lead contact member 130, and the compression unit in the first direction may be (t2+2*t4a+2*t3).

Meanwhile, as described above, the thickness t3 of the lead contact member in the first direction may be less than or equal to half the difference between the thickness t1 of the plate body in the first direction and the thickness t2 of the installation member in the first direction, and thus, the sum of the thicknesses of the installation member 122, the lead contact member 130, and the compression unit in the first direction may be less than or equal to (t1+2^{∗}t4a).

The battery cells 10 may be disposed on both sides of the plate body 121. In this case, the thickness in the first direction between the electrode leads 13 adjacent to each other with the plate interposed therebetween may be (t1+t5) obtained by adding the thickness t5 of the battery cell in the first direction and the thickness t1 of the plate body in the first direction.

At this time, since the lead contact member 130 may contact the electrode lead 13, when the compression unit is not compressed, the sum of the thicknesses of the installation member 122, the lead contact member 130, and the compression unit in the first direction may be equal to the thickness between adjacent electrode leads 13 with the plate interposed therebetween in the first direction. Therefore, since (t1+2^{∗}t4a) may be greater than or equal to (t1+t5), the maximum thickness t4a of the compression unit in the first direction may be half or more of the thickness t5 of the cell body in the first direction. Accordingly, when the battery cell 10 is accommodated between the plates 120 and the plate 120 is pressed in the first direction (the X-direction), the lead contact member 130 may be disposed outside the plate in the first direction in the second position and may contact the electrode lead 13.

That is, the lead contact member 130 may contact the electrode lead 13 due to the change in thickness of the compression unit, or may be maintained in a state in which the installation member 122 does not protrude relative to the plate body 121 in the installation member 122

According to an embodiment of the present disclosure having such a configuration, damage to the charge-discharge plate may be prevented during pressing without performing a process of additionally inserting a dummy cell into an empty space between the plates.

Also, according to another embodiment of the present disclosure, deformation of the plate may be prevented during pressing, regardless of additional insertion of a dummy cell.

And, according to another embodiment of the present disclosure, damage to the electrode lead may be reduced.

Further, according to another embodiment of the present disclosure, a process of additionally inserting a dummy cell into an empty space between plates may be omitted, thereby improving a work speed.

Only specific examples of implementations of certain embodiments are described. Variations, improvements and enhancements of the disclosed embodiments and other embodiments may be made based on the disclosure of this patent document.

## Claims

1. A pressing apparatus for a battery cell, the pressing apparatus comprising:
a frame;
a plurality of plates movably installed in the frame in a first direction and arranged to face each other in the first direction to form accommodating space;
a lead contact member including a charge-discharge plate electrically connected to an electrode lead of a battery cell for at least one of charging and discharging of the battery cell accommodated in the accommodating space; and
a moving unit connected to the lead contact member so that the lead contact member is movable in the first direction,
wherein the moving unit is configured to move between a first position in which the lead contact member is disposed inside the plurality of plates in the first direction and a second position in which the lead contact member is disposed outside the plurality of plates in the first direction.

2. The pressing apparatus of claim 1, wherein
each of the plurality of plates includes a plate body in contact with a cell body of the battery cell and an installation member located outside the plate body in a second direction, which is a length direction of the plurality of plates, and on which the moving unit is disposed, and
a thickness of the installation member in the first direction is less than a thickness of the plate body in the first direction.

3. The pressing apparatus of claims 1 or 2, wherein the moving unit is disposed on both sides of the installation member in the first direction.

4. The pressing apparatus of any one of preceding claims, wherein a thickness of the lead contact member in the first direction is less than or equal to half of a difference between the thickness of the plate body and the thickness of the installation member in the first direction.

5. The pressing apparatus of any one of preceding claims, wherein the installation member is disposed on each of both ends of the plurality of plates in the second direction.

6. The pressing apparatus of any one of preceding claims, wherein the lead contact member is disposed to be connected to the moving unit to face both sides of the installation member in the first direction.

7. The pressing apparatus of any one of preceding claims, wherein the charge-discharge plate is disposed to be connected to the moving unit to face both sides of the installation member in the first direction.

8. The pressing apparatus of any one of preceding claims, wherein
the lead contact member includes a support member supporting the other side of the electrode lead when the charge-discharge plate contacts one side of the electrode lead,
the charge-discharge plate is connected to the moving unit to face one of both sides of the installation member in the first direction, and the support member is connected to the moving unit to face the other side.

9. The pressing apparatus of any one of preceding claims, wherein
the moving unit includes a compression unit capable of compressing in the first direction, and
the lead contact member is disposed in the first position as the compression unit is compressed.

10. The pressing apparatus of any one of preceding claims, wherein a maximum thickness of the compression unit in the first direction is half or more of a thickness of a cell body of the battery cell.

11. The pressing apparatus of any one of preceding claims, wherein the compression unit includes an air chamber configured to be expanded upon receiving air from the outside or to be compressed by discharging air to the outside.

12. The pressing apparatus of any one of preceding claims, further comprising a pressing member connected to the frame and pressing the plurality of plates in the first direction.

13. The pressing apparatus of any one of preceding claims, further comprising a pressure sensor connected to the frame and configured to directly or indirectly measure pressure applied to the battery cell.
